**Europäisches Patentamt**

(19) **European Patent Office**

**Office européen des brevets**

(11) Publication number: **0 007 938**
**B1**

# (12) EUROPEAN PATENT SPECIFICATION

(45) Date of publication of patent specification: **04.08.82**

(51) Int. Cl.³: **F 16 D 3/30**

(21) Application number: **78900040.3**

(22) Date of filing: **07.07.78**

(86) International application number:
**PCT/US78/00037**

(87) International publication number:
**WO 79/00033 25.01.79 Gazette 79/2**

(54) **FLEXIBLE COUPLING.**

(30) Priority: **07.07.77 US 813463**

(43) Date of publication of application:
**20.02.80 Bulletin 80/4**

(45) Publication of the grant of the patent:
**04.08.82 Bulletin 82/31**

(84) Designated Contracting States:
**CH DE FR GB**

(56) References cited:
**DE - A - 1 625 758**
**FR - A - 563 416**
**FR - A - 1 010 911**
**FR - A - 2 240 658**
**GB - A - 526 265**
**GB - A - 627 902**
**GB - A - 879 028**
**GB - A - 972 890**
**US - A - 1 128 430**
**US - A - 1 392 754**
**US - A - 1 772 915**
**US - A - 1 868 818**

(73) Proprietor: **GREENE, Jerome**
**1241 Barclay Court**
**Westlake Village California 91361 (US)**

(72) Inventor: **GREENE, Jerome**
**1241 Barclay Court**
**Westlake Village California 91361 (US)**

(74) Representative: **Thomson, Paul A. et al,**
**Potts, Kerr & Co. 15, Hamilton Square**
**Birkenhead Merseyside L41 6BR (GB)**

(56) References cited:
**US - A - 2 681 552**
**US - A - 2 752 766**
**US - A - 2 896 430**
**US - A - 2 995 907**
**US - A - 2 969 657**
**US - A - 3 519 260**
**US - A - 3 257 826**
**US - A - 4 012 923**

Courier Press, Leamington Spa, England.

## Flexible coupling

### Technical Field

This invention is in the field of flexible drive couplings, and more specifically constant velocity universal joint drive couplings for transmitting torque between driving and driven rotary elements.

### Background of Prior Art

Prior art flexible drive couplings use sliding and rolling surfaces between relatively moveable parts of the coupling elements. Load capacities and rotational speeds of such couplings are limited, and lubrication requirements critical, particularly in applications designed to accommodate misalignment of more than a fraction of a degree between the driving and the driven components. Constant velocity universal joint couplings tend to be complex and costly mechanical elements, requiring rather superprecision manufacturing tolerances and complicated assembly procedures.

So-called elastomeric flexible couplings transmitting torque through a laminated elastomeric-inelastic material, either in compression or shear, or a combination of the two are particularly limited in both torque and misalignment capacity. The prior art is also known to use elastomeric materials in universal joints in lieu of sliding and rolling bearings at the surfaces transmitting the torque loads.

Exemplary prior art can be observed in Patent Nos. U.S. 2,681,552, U.S. 2,995,907 and U.S. 4,012,923. Patent No. 2,681,552 shows a flexible coupling using sliding surfaces which are configured to provide a driving coupling in which the driving forces are transmitted across mating flat surfaces of the coupling. Patent No. 2,995,907 discloses laminated flexible couplings used in a universal joint but does not disclose how such a laminated assembly can be utilized in a flexible coupling arranged to transmit the driving forces across curved surfaces of the type disclosed in Patent No. 2,681,552 mentioned above. Patent No. 4,012,923 discloses a flexible coupling in which a lamination of elastomer and inelastic materials are used to transmit rotary driving forces, but likewise this patent does not disclose the use of a laminated assembly having an intermediate layer that permits the assembly to be used in a flexible coupling similar to that shown in U.S. 2,681,552.

The present invention is intended to overcome various problems associated with flexible drive couplings in a unique manner which enables the attainment of a simple, rugged, non-lubricated constant velocity flexible drive coupling capable of transmitting high loads at high rotational speeds while accommodating extreme misalignment between the driving and driven coupling members.

### Summary of the Invention

The present invention is a unique constant velocity universal joint flexible coupling utilizing basically a foursided square drive between coaxial driving and driven members, with curved and flat laminated elastomeric-inelastic material disposed between the driving surfaces, called "flats", of the coupling, so that no surface sliding or rolling occurs when the driving and driven parts of the coupling move relative to each other.

The surfaces of the flats of the inner coupling member are cylindrically longitudinally curved about orthogonal axes of curvature intersecting at the longitudinal center line of the member, but are planar across their widths. The cooperating flats of the outer member of the coupling extend parallel to the rotary axis of the outer member of the coupling, and are not curved at all. A laminated elastomeric-inelastic material is interposed between and bonded to the opposing flats of the inner and outer members of the coupling. The inner layers of laminated material extend parallel to the flats of the inner members; the outer layers of the laminated material extend parallel to the flats of the outer member. All the layers of laminated material are bonded to themselves and to the flats. Torque loads about the axis of the coupling are transmitted through the flats and through the laminated material in a compressional sense. The nature of the laminated material is such that it is virtually incompressible transversely of the laminations, while it is relatively soft in resisting shear or torsion loads acting parallel to the planes of the laminated layers. Therefore, relative longitudinal movement or axial misalignment between the inner and outer coupling members is accommodated simply by the deformation of the laminated material in shear or torsion senses, with the specific layers undergoing elastic deformation and the nature and degree of such deformation depending upon the instantaneous azimuthal location of the particular flats between which the laminate is situated during rotation of the coupling.

Axial displacement between inner and outer coupling members is accommodated by the elastic deformation of the outer layers of laminated material between opposed flats. However, a rigid trunnion joint is contemplated for use between inner and outer members to prevent relative axial displacement between the coupling members, while still leaving undisturbed all of the other characteristics of the basic coupling embodying the invention. The trunnion joint is also provided with a laminated bearing arrangement so that this embodiment, like the basic embodiment, does not require sliding or rolling surfaces to accommodate relative motion between driving and driven parts.

## Brief Description of the Drawings

With reference to the drawings forming a part of the specification,

FIGURE 1 is a vertical sectional view of a flexible coupling embodying the present invention;

FIGURE 2 is a cross sectional view taken along line II—II of FIGURE 1;

FIGURE 3 shows the coupling of FIGURE 1 with elements misaligned;

FIGURE 4 shows the coupling of FIGURE 1 with the elements axially displaced relative to each other;

FIGURE 5 shows an alternate embodiment of the coupling embodying this invention, this embodiment incorporating a trunnion assembly;

FIGURE 6 is a view taken along line VI—VI of FIGURE 5;

FIGURE 7 shows a coupling of FIGURE 5 axially misaligned and

FIGURE 8 shows a coupling used in pairs to transmit drive torque through offset, parallel shafts.

## Detailed Description

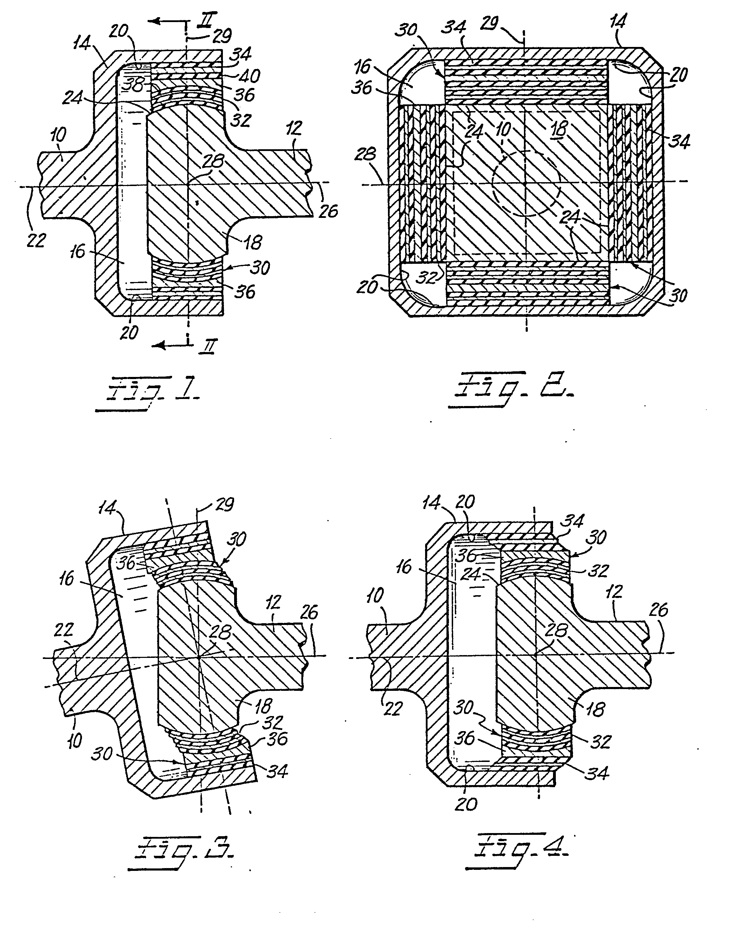

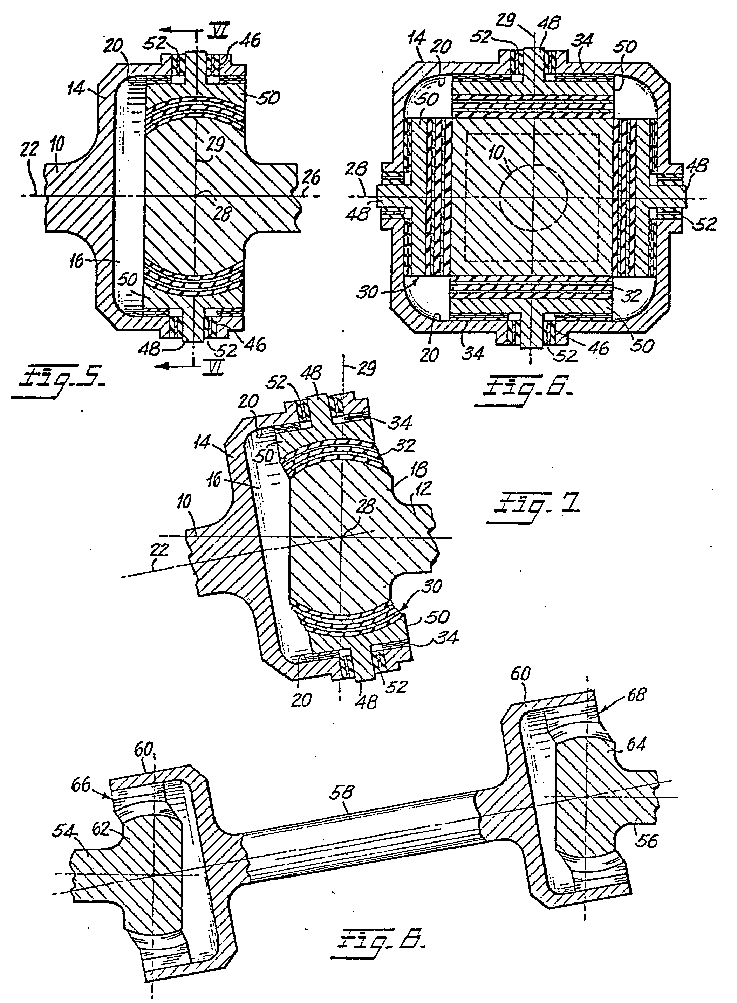

With reference to FIGURE 1, the flexible coupling embodying the present invention includes, for example, a first and second shaft 10 and 12, either of which may be driven by the other. The first shaft 10 includes an outer member 14 provided with an internal cavity 16 in which is disposed an inner member 18, all as illustrated in FIGURES 1 and 2.

The internal cavity 16 within outer member 14 is provided with flat wall portions 20 which define four outer flats that are symmetrically disposed about and face the longitudinal axis 22 of outer member 14.

The inner member 18 is disposed centrally within the cavity 16 and includes four external surfaces symmetrically located about the longitudinal axis 26 of shaft 12 and inner member 18. The four surfaces 24 define inner flats that face the four outer flats defined by the flat wall portions 20 of outer member 14. The inner flats 24, as seen in FIGURES 1 and 2, are cylindrically curved along their lengths (along the longitudinal axis 26) about orthogonal axes of curvature 28, 29, but they are substantially planar across their widths in a circumferential sense about longitudinal axis 26, as best seen in FIGURE 2. The inner flats 24 are located equidistant from and face the outer flats 20 as shown in FIGURE 2 to define spaces between opposed pairs of inner and outer flats.

A bonded assembly of elastomer-inelastic layers 30 is disposed between and connected by bonding to each pair of opposed inner and outer flats 24—40. The bonded assembly extends over at least substantially the full width of the inner flats 24, as shown in FIGURE 2, and the assembly 30 includes a plurality of inner layers 32 adjacent and extending parallel to the inner flats 24, and a plurality of outer layers 34 adjacent and extending parallel to the outer flats. An intermediate layer 36 has dissimilar curved surfaces on its inner and outer sides, including an inner surface 38 extending parallel to inner flat 24 and an outer surface 40 extending parallel to outer flat 20. The bonded assembly 30 comprises, for example, alternate layers of elastomer and metal, or other inelastic material. The intermediate layer 36 may be either elastic or inelastic material. The characteristic of such a laminated assembly is well known; namely, it is rigid in compression (virtually incompressible) while it is relatively soft in shear, that is in a direction parallel to the layers.

Thus, with reference now particularly to FIGURES 2 through 4, the laminated assembly 30 transmits rotational driving forces about axes 22, 26 transmitted through the flats 20—24 and through the bonded assembly 30 acting directly in compression. It will be observed that there is virtually no lost motion between driving and driven elements, large forces can be transmitted through the flats; and there are no sliding or relatively rotating surfaces. The torque transmission is direct between the members. As seen in FIGURE 3, misalignment of the axes 22, 26 is accommodated by the elastic deformation of the elastomeric layers of the inner layers 32 of the bonded assembly 30. Due to the cylindrical curvature of the inner flats 24 along the longitudinal axis 26, the upper and lower assemblies 30 shown in FIGURE 3 will deform as illustrated, while the other two flat planar laminated assemblies not shown (those to the left and right in FIGURE 2) will torsionally deform about the axis 28. Axes 28 and 29 intersect at axis 26.

As seen in Figure 4, relative axial displacement of members 10, 12 is accommodated by the elastic deformation of the elastomeric layers in the outer layers 34 of bonded assembly 30. It will readily be appreciated that a combination of angular misalignment such as shown in Figure 3 and relative axial displacement between the members as shown in Figure 4 will be accommodated by the elastic deformation of the elastomeric layers comprising the inner and outer layers 32, 34, respectively, of the bonded assembly 30.

Rotatable members 10 and 12 are illustrated for exemplary purposes as drive shaft elements. However, it should be understood that the concept of the present invention is applicable to any arrangement of driving and driven elements. For example, the outer member could be a gear wheel or a fly wheel with the appropriate internal cavity 16 being provided within the respective member. Also, the number of layers in the bonded assembly 30 could be varied to suit particular operating requirements.

Obviously, more laminations would permit a greater degree of misalignment between the driving and driven elements, as well as permit a greater degree of relative axial displacement between these members. Also, if it is desired to obtain a greater degree of freedom in terms of angular misalignment, a greater number of inner layers 32 can be provided as compared to the number of outer layers 34. Conversely, a greater or lesser number of outer layers 34 can be utilized to accommodate a greater or lesser degree of relative axial displacement between the rotary members.

An alternate embodiment of the present invention is shown in Figures 5, 6 and 7. In accordance with this embodiment, relative axial displacement between members 10 and 12 is prevented by using a trunnion pivot assembly which will now be described.

With reference to Figures 5 and 6, the outer member 14 is provided with apertures 46 which extend through each of the outer flats 20. The center line of each of the apertures 46 lies along the respective one of said orthogonal axes 28, 29 that extends through the outer flat 20 through which the aperture normally extends when axes 22 and 26 are aligned. Two opposed pairs of trunnion pivots 48 extend through the apertures 46, the inner ends of the trunnion pivots 48 being connected to one of the inelastic layers 50 among the intermediate layer 36 shown in Figures 1 and 2, with said intermediate layer 36 and said layer 50 being considered as an outer layer in the context of the present specification. That is to say, the inner ends of trunnion pivots 48 can be connected to any of the non-elastic layers forming a part of the outer layers 34 of the bonded assembly, including the intermediate layers 36 or 50. The intermediate layers 36 or 50, because of their geometry and location, actually perform functions of both the inner and outer layers of the bonded assembly. Nevertheless, it should be understood that when the trunnion pivot means is described as being rigidly connected to at least one of the inelastic outer layers of the bonded assembly 30, such layer may include the intermediate layer 36 or 50 or any of the rigid layers of outer layers 34.

Between the outer periphery of the trunnion pivots 48 and the inner surfaces of the apertures 46, there is provided another bonded assembly of laminated elastic-inelastic material 52 which in each instance is bonded on its either side to the periphery of the pivots 48 and the inner sidewall surface of the apertures 46.

As illustrated in Figure 7, angular misalignment between longitudinal axes 22 and 26 of members 10 and 12, respectively, is accommodated by elastic deformation of layers 32 and the torsional elastic deformation of the layers 32 and the torsional elastic deformation of the layers 34. The trunnion pivots 48 will prevent relative axial displacement between the members 10 and 12, with the pivots 48 rotating within apertures 46 and the elastomeric layers of the laminated assembly 50 undergoing torsional elastic deformation to accommodate the relative pivotal motion between trunnion pivots 48 and the sidewalls of the apertures 46. The trunnion pivots 48 resist forces tending to axially displace members 10 and 12 relative to each other by reacting the loads through the laminate assembly 30 in compression.

Figure 8 exemplifies a specific application of the flexible coupling of this invention. In this example, shafts 54, 56 are offset from each other and connected through an intermediate connecting shaft 58. Shaft 58 includes outer members 60 at either end that correspond with outer member 14 in Figure 1. Internal members 62, 64 are provided with the internal flats of the present invention, while the outer members 60 are provided with internal cavities that include planar sidewall portions carrying the outer flats described previously in connection with Figures 1—7. It will be apparent that laminated members 66, 68 which correspond to laminate assembly 30 previously described will permit the transmission of torque between the shafts 54 and 56 due to the ability of the flexible coupling of the present invention to accommodate the misalignment and relative axial displacement between the rotating members that may occur.

The embodiments described in this specification and illustrated in the drawings are considered to be exemplary only, and depict a presently preferred mode of carrying out the present invention. Such examples are not intended to limit the scope of the invention in any way, such invention being that which is defined in the claims set forth below.

## Claims

1. A flexible coupling including an outer member (14) rotatable about a first longitudinal axis (22) and having an internal cavity (16) with flat wall portions defining four outer flats (20) symmetrically disposed about and facing towards the first longitudinal axis (22); an inner member (18) disposed at least in part centrally within the said cavity (16) and having external surfaces symmetrically located about a second longitudinal axis (26), said surfaces defining four inner flats (24), said inner flats being cylindrically curved along their lengths along the second longitudinal axis about orthogonal axes (28, 29) of curvature that intersect at the second axis (26), said orthogonal axes (28, 29) laying in a common plane extending normal to the second axis (26), and said inner flats (24) being flat across their respective widths in a circumferential sense about the second axis (26), said inner member (18) being rotatable about the second axis (26), and said inner flats (24) being oppositely spaced equidistant from and facing said outer flats (20) to define spaces between opposed pairs of inner and outer flats; characterised by independent laminated assemblies (30) each made up of thin layers of elastomer-inelastic material disposed between and connected by bonding to each opposed inner and outer flat pairs, each laminated assembly extending over at least substantially the full width of the inner flats (24), said laminated assembly including a plurality of inner layers (32) adjacent and extending parallel to the inner flats (24), a plurality of outer layers (34) adjacent and extending parallel to the outer flats (20) and an intermediate layer (36) between said inner and outer layers, said intermediate layer (36) having oppositely disposed surfaces extending in planes generally normal to a radial line extending from said first longitudinal axis, one of said surfaces comprising a curved inner surface (38) extending parallel to the respective inner flat and the other of said surfaces comprising a flat outer surface (40) extending parallel to the respective outer flat.

2. The coupling according to Claim 1, characterised in that the portion of the inner member (18) that includes the inner flats (24) is substantially square in transverse cross section.

3. The coupling according to Claim 1, characterised in that the said cavity flat wall portions define substantially a square cavity.

4. The coupling according to Claim 1, characterised in that apertures (46) are provided in each of the outer flats (20), the centre line of each aperture extending along the respective one of said orthogonal axes (28, 29) projected through the outer flat (20) in which the aperture (46) is provided when said first and second longitudinal axes (22, 26) are aligned; and trunnion pivot means (48) centrally supported within each of the apertures (46) are provided, each trunnion pivot means being rigidly connected to a respective one of said intermediate layers (36), said intermediate layers each comprising an in-elastic layer.

5. The coupling according to Claim 4, characterised in that the apertures (46) have inner surface areas; said trunnion pivot means are pin members (48) that are each centrally disposed within a respective aperture, each pin member (48) being smaller in cross sectional area than the cross sectional area of the aperture (46) to thereby leave a space between the pin member (48) and the inner surface area of its respective aperture (46); and in that a bonded assembly of laminated elastomer-inelastic material (52) is disposed between each pin (48) and the inner surface of the respective aperture (46) in which the pin (48) is located, each of the recited bonded assemblies being also bonded to the pin (48) and the inner surface area of the aperture (46); and in that the layers of each of the last recited bonded assemblies are cylindrically curved about the centre of each respective aperture.

**Revendications**

1. Accouplement flexible comprenant un membre extérieur (14) susceptible de tourner autour d'un premier axe longitudinal (22) et ayant une cavité interne (16) avec des parties de parois planes définissant quatre plats externes (20) faisant face au premier axe longitudinal (22) et disposés symétriquement autour de cet axe; un membre intérieur (18) disposé au moins en partie au centre et à l'intérieur de ladite cavité (16) et ayant des surfaces externes situées symétriquement autour d'un second axe longitudinal (26), lesdites surfaces définissant quatre plats internes (24), lesdits plats internes étant courbés cylindriquement dans le sens de leur longueur selon le second axe longitudinal autour de deux axes de courbure orthogonaux (28, 29) coupant le second axe (26), lesdits axes orthogonaux (28, 29) étant dans un plan perpendiculaire au second axe (26), lesdits plats internes (24), périphériques au second axe (26), étant plans dans le sens de leurs largeurs respectives, ledit membre intérieur (18) étant susceptible de tourner autour de second axe (26) et lesdits plats internes (24) faisant face et étant disposés de manière équidistante aux plats externes (20) pour définir des espaces entre les paires opposées des surfaces internes et externes, caractérisé par le fait qu'il comprend des assemblages feuilletés indépendants (30) formés de couches minces de matériau élastomère non élastique disposées entre chaque paire de plats internes et externes opposés et reliés de manière indétachable auxdites paires de plats, chaque assemblage feuilleté s'étendant au moins substantiellement sur toute la largeur des plats internes (24), lesdits assemblages comprenant une pluralité de couches internes (32) adjacentes et s'étendant parallèlement aux plats internes (24), une pluralité de couches externes (34) adjacentes et s'étendant parallèlement aux plats externes (20) et une couche intermédiaire (36) entre lesdites couches internes et externes, ladite couche intermédiaire (36) ayant des surfaces opposées s'étendant dans des plans généralement normaux à une ligne radiale au premier axe longitudinal, l'une desdites surfaces étant une surface courbe interne (38) s'étendant parallèlement au plat interne correspondant et l'autre desdites surfaces étant une surface externe plane (40) s'étendant parallèlement au plat externe correspondant.

2. Accouplement selon la revendication 1, caractérisé par le fait que la partie du membre intérieur (18) qui comprend les plats internes (24) a une section transversale de forme substantiellement carrée.

3. Accouplement selon la revendication 1, caractérisé par le fait que les parties de parois planes de ladite cavité définissent une cavité de forme substantiellement carrée.

4. Accouplement selon la revendication 1, caractérisé par le fait que des ouvertures (46) sont pratiquées dans chacun des plats externes (20), l'axe de chaque ouverture s'étendant le long d'un axe correspondant desdits axes orthogonaux (28, 29) prolongé à travers la plat externe (20) dans lequel l'ouverture (46) est pratiquée lorsque lesdits premier et second axes longitudionaux (22, 26) sont alignés; et par le fait qu'il comprend des moyens de tourillon (48) supportés centralement dans chacune des ouvertures (46), chaque moyen de tourillon étant relié rigidement à une couche correspondante desdites couches intermédiaires (36), lesdites couches intermédiaires comprenant chacune une couche non élastique.

5. Accouplement selon la revendication 4, caractérisé par le fait que les ouvertures (46) ont des surfaces internes de section déterminée; que lesdits moyens de tourillon sont des goupilles (48) disposées chacune au centre d'une ouverture correspondante, chaque goupille (48) étant de section transversale plus petite que la section transversale de l'ouverture (46) de manière à laisser un espace entre la goupille (48) et la surface interne de l'ouverture correspondante; qu'un assemblage indétachable de matériau élastomère non élastique feuilleté (52) est prévu entre chaque goupille (48) et la surface interne de l'ouverture (46) correspondante dans laquelle la goupille (48) est logée, chacun desdits assemblages étant aussi relié de manière indétachable à la goupille (48) et à la surface interne de l'ouverture (46), et par le fait que les couches de chacun desdits assemblages sont courbées cylindriquement autour du centre de chaque ouverture correspondante.

**Patentansprüche**

1. Flexible Kupplung mit einem äusseren, um eine erste Längsachse (22) drehbaren Glied (14), das einen inneren Hohlraum (16) mit ebenen Wandteilen aufweist, welche vier äussere ebene Flächen (20) bilden, die symmetrisch um die erste Längsachse (22) angeordnet und dieser Achse zugewandt sind, ferner einem inneren Glied (18), welches mindestens teilweise zentrisch im Hohlraum (16) angeordnet ist und äussere Flächen aufweist, welche symmetrisch um eine zweite Längsachse liegen und vier innere Flächen (24) bilden, wobei die vier inneren Flächen in der Richtung ihrer Länge entlang der zweiten Längsachse um zwei zueinander senkrechten Krümmungsachsen (28, 29), welche die zweite Längsache (26) schneiden, zylindrisch gewölbt sind und die zwei senkrechten Achsen (28, 29) in einer zur zweiten Achse (26) senkrechten Ebene liegen, wobei die in Umfangsrichtung bezüglich der zweiten Längsachse (26) liegenden inneren Flächen (24) in Richtung ihrer jeweiligen Breite eben sind, und wobei das innere Glied (18) um die zweite Achse (26) drehbar ist und die inneren Flächen (24) in gleichen Abständen den äusseren Flächen (20) gegenüberliegen, um Räume zwischen gegenüberliegenden Paaren von inneren und äusseren Flächen zu bilden, gekennzeichnet durch unabhängige, lamellierte Einheiten (30), jede bestehend aus dünnen Schichten aus unelastischem Elastomer-Material, die zwischen jedem Paar von inneren und äusseren gegenüberliegenden Flächen angeordnet und mit diesen Paaren von Flächen verbunden sind, wobei jede lamellierte Einheit sich im wesentlichen mindestens über die ganze Breite der inneren Flächen (24) erstreckt und wobei die Einheit eine Mehrzahl von inneren, parallel zu den inneren Flächen (24) verlaufenden und an dieselben anliegenden Schichten (32) eine Mehrzahl von äusseren, parallel zu den äusseren Flächen (20) verlaufenden und an dieselben anliegenden Schichten (34) und eine Zwischenschicht (36) zwischen den inneren und äusseren Schichten aufweist, wobei die Zwischenschicht (36) gegenüberliegende Flächen aufweist, welche im wesentlichen in zu einer zur ersten Längsachse radialen Linie senkrechten Ebenen liegen, wobei die eine dieser Flächen eine gekrümmte, innere Fläche (38) aufweist, die parallel zu der entsprechenden inneren Fläche verläuft und die andere dieser Flächen eine äussere, ebene Fläche (40) aufweist, die parallel zu der entsprechenden äusseren Fläche verläuft.

2. Kupplung gemäss Anspruch 1, dadurch gekennzeichnet, dass der Teil des inneren Gliedes (18), welcher die inneren Flächen (24) aufweist, einen im wesentlichen quadratischen Querschnitt aufweist.

3. Kupplung gemäss Anspruch 1, dadurch gekennzeichnet, dass die ebenen Wandteile des Hohlraumes einen im wesentlichen quadratischen Hohlraum definieren.

4. Kupplung gemäss Anspruch 1, dadurch gekennzeichnet, dass in jeder der äusseren Flächen (20) Oeffnungen (46) vorgesehen sind, dass die Achse jeder Oeffnung entlang derjenigen der senkrechten Achsen (28, 29) verläuft, welche die innere Fläche (20), in welcher die Oeffnung vorgesehen ist, durchstösst, wenn die erste (22) und die zweite (26) Längsachse fluchten, dass sie Drehzapfen-Mittel (48) aufweist, welche je zentral in einer Oeffnung (46) gehalten sind, wobei jedes Drehzapfen-Mittel mit einer zugeordneten Zwischenschicht (36) fest verbunden ist, und dass die Zwischenschichten je eine unelastische Schicht aufweisen.

5. Kupplung gemäss Anspruch 4, dadurch gekennzeichnet, dass die Oeffnungen (46) innere Flächen eines bestimmten Querschnitts aufweisen, dass die Drehzapfen-Mittel Zapfen (48) sind, welche je im Zentrum einer zugeordneten Oeffnung angeordnet sind, wobei jeder Zapfen (48) einen kleineren Querschnitt als der Querschnitt der Oeffnung (46) aufweist, um einen Raum zwischen dem Zapfen (48) und der inneren Fläche der entsprechenden Oeffnung frei zu lassen, dass eine fest verbundene Einheit aus lamelliertem unelastischen Elastomer-Material (52) zwischen jedem Zapfen (48) und der entsprechenden inneren Fläche der Oeffnung (46), in welcher der Zapfen gehalten ist, vorgesehen ist, wobei jede Einheit auch fest mit dem Zapfen (48) und der inneren Fläche der Oeffnung (46) verbunden ist, und dass die Schichten jeder Einheit um die Mittellinie jeder Oeffnung zylindrisch gekrümmt sind.

Fig. 1.

Fig. 2.

Fig. 3.

Fig. 4.

Fig. 5.

Fig. 6.

Fig. 7.

Fig. 8.